# EUROPEAN PATENT SPECIFICATION

(11) **EP 3 420 409 B1**
(45) Date of publication and mention of the grant of the patent: **19.11.2025**
(21) Application number: 17757062.9
(22) Date of filing: 21.02.2017
(51) Int. Cl.: G02F 1/01, G02F 1/163, B60J 3/04, G09G 3/19

(54) **ELECTRONICALLY DIMMING WINDOW WITH IMPROVED PERFORMANCE**
ELEKTRONISCHES DIMMFENSTER MIT VERBESSERTER LEISTUNG
FENÊTRE À GRADATION ÉLECTRONIQUE À PERFORMANCE AMÉLIORÉE

(30) Priority: 22.02.2016 US 201662298404 P; 14.10.2016 US 201662408448 P
(43) Date of publication of application: 02.01.2019
(73) Proprietor: Gentex Corporation, Zeeland, MI 49464 (US)
(72) Inventor: ASH, Kevin L., Zeeland, Michigan 49464 (US); STEPHENSON, Michael T., Zeeland, Michigan 49464 (US); WASSINK, Carl N., Zeeland, Michigan 49464 (US)
(74) Representative: Müller-Boré & Partner Patentanwälte PartG mbB
(86) International application number: PCT/US2017/018693
(87) International publication number: WO 2017/147063

(56) References cited:
- WO-A1-03/096115
- WO-A2-2007/146862
- US-A1- 2004 001 056
- US-A1- 2005 152 018
- US-A1- 2006 245 024
- US-A1- 2015 070 745
- US-B1- 6 501 457
- US-B2- 8 547 624

## Description

### BACKGROUND OF THE INVENTION

The present invention generally relates to variable transmission windows. More specifically, the claimed invention relates to control systems and a method for controlling the transmission of variable transmission windows.

Variable transmittance light filters, such as electrochromic light filters, have been proposed for use in architectural windows, skylights, and in windows, sunroofs, and rearview mirrors for automobiles. Such variable transmittance light filters reduce the transmittance of direct or reflected sunlight during daytime through the window, while not reducing such transmittance during nighttime. Not only do such light filters reduce bothersome glare and ambient brightness, but they also reduce fading and generated heat caused by the transmission of sunlight through the window.

Variable transmission windows have not been widely accepted commercially for several reasons. First, they tend to be very expensive due to the cost of materials required for their construction, and their complex construction can make mass-production difficult. Additionally, electrochromic windows tend to have a lower life expectancy than conventional windows due to degradation of the electrochromic materials used in the windows. The combination of added cost and lower life expectancy has deterred many architects, designers, and builders from using electrochromic windows.

Variable transmission windows have also not been widely accepted commercially in vehicles designed for the transportation of passengers, such as, for example, busses, airplanes, trains, ships, and automobiles. The inventors have recognized that providing for the use of variable transmission windows in these types of vehicles provides challenges in addition to those already noted above. These challenges can include, but are not limited to, providing effective, coordinated, individual and central control of multiple variable transmission windows, providing multiple modes of operation responsive to individual or collective passenger needs, providing the ability to quickly change window transmittance states, minimizing system power consumption, protecting against environmental factors such as moisture and power surges, protecting windows from excessive heat and physical external loads, and providing user interfaces allowing relatively unsophisticated users to understand and control the windows. The inventors have also recognized that manufacturing challenges can prove a barrier to providing system features needed to address the above-identified needs.

US 2004/001056 A1 provides a driver that provides voltage level and polarity select control via a signal to an electrochromic device to vary light transmittance of the device. The driver has a fail-safe feature relative to the electrochromic device if a microcontroller of the driver fails. The driver is sufficiently efficient so as not to necessarily need a heat sink. The driver may sense and measure current and voltage into the electrochromic device.

US 6 501 457 B1 provides for a circuit arrangement that can control light transmission of an electrochromic glass that involves generating a control voltage that is applied to the electrochromic glass to bring about a desired transparency or lack of transparency. The actual voltage on the glass is measured at certain intervals and compared with a reference voltage that corresponds to a desired light transmission. A control voltage of positive or negative polarity is applied to the electrochromic glass for a certain charging or discharging period, depending on the deviation of the actual voltage from the reference value, and the actual voltage on the glass is again measured and compared with the reference voltage. These steps are repeated until the actual voltage on the glass is substantially equal to the reference voltage.

WO 2007/146862 A2 discloses an electrical control system for controlling a plurality of variable transmittance windows. The electrical control system comprises a master control circuit and user input circuits for supplying control signals representing transmittance levels for the variable transmission windows, and a plurality of slave window control circuits coupled to the master control circuit, user input circuits, and the variable transmittance windows. Each slave window control circuit controls the transmittance of at least one of the variable transmission windows in response to control signals received from the master control circuit and/or user input circuits.

### SUMMARY OF THE INVENTION

The present invention is defined by the features disclosed in the independent claims. Preferred embodiments are defined in the dependent claims. According to one example of the present disclosure, a control system for variable transmittance windows is disclosed. The system comprises, inter alia, one electro-optic element, a local control circuit, and a feedback circuit. The local control circuit is in communication with the electro-optic element via a conductive supply and is configured to control an output voltage. The feedback circuit is in communication with the conductive supply. The feedback circuit is configured to measure a supplied voltage received at the conductive supply and communicate a feedback signal to the local control circuit. The local control circuit is configured to receive the feedback signal and identify the supplied voltage based on the feedback signal. Based on the feedback signal, the local control circuit is configured to compare the supplied voltage to an optimum voltage level and adjust the output voltage in response to the comparison.

According to another example of the present disclosure, a method for controlling a transmission level of a variable transmission window is disclosed. The method comprises, inter alia, measuring a supplied voltage at a conductive supply of the variable transmission window and communicating the supplied voltage to a controller as a feedback signal. The method further comprises receiving the feedback signal at the controller, identifying a supplied voltage at the conductive supply based on the feedback signal, and comparing the supplied voltage to an optimum voltage level. In response to the comparison, the method further comprises adjusting an output voltage. The output voltage is adjusted thereby correcting for a loss in the supplied voltage at the conductive supply.

These and other features, advantages and objects of the present invention will be further understood and appreciated by those skilled in the art by reference to the following specification, claims and appended drawings.

### BRIEF DESCRIPTION OF THE DRAWINGS

In the drawings:
Fig. 1 is a general illustration of multi-passenger vehicles incorporating variable transmission windows, according to one embodiment of the present invention;
Fig. 2 is a block diagram generally illustrating a system for controlling variable transmission windows, according to the present invention;
Fig. 3 is a detailed block diagram generally illustrating a system for controlling variable transmission windows, according to the present invention;
Fig. 4 is a front view generally illustrating a variable transmission window and system for controlling the variable transmission window according to one embodiment of the present invention;
Fig. 5 is a perspective view of one panel of an electrochromic element employed in the variable transmission window illustrated in FIG. 4;
Fig. 6 is a partial cross-sectional view taken through line VI-VI of the variable transmission window and supporting structure illustrated in FIG. 4;
FIG. 7 is graph of a current limit versus a transition time in seconds for a variable transmittance window control system with a sense electrode and a variable transmittance window control system without a sense electrode; and
FIG. 8 is graph demonstrating a performance comparison of variable transmission window control systems comprising voltage sensing of supplied voltage and conventional control systems in accordance with the disclosure.

### DETAILED DESCRIPTION OF THE PREFERRED EMBODIMENTS

Reference will now be made in detail to the present preferred embodiments of the invention, examples of which are illustrated in the accompanying drawings. Wherever possible, the same reference numerals will be used throughout the drawings to refer to the same or like parts.

For purposes of description herein, the terms "upper," "lower," "right," "left," "rear," "front," "vertical," "horizontal," "top," "bottom," and derivatives thereof shall relate to the invention as shown in the drawings. However, it is to be understood that the invention may assume various alternative orientations, except where expressly specified to the contrary. It is also to be understood that the specific device illustrated in the attached drawings and described in the following specification is simply an exemplary embodiment of the inventive concepts defined in the appended claims. Hence, specific dimensions, proportions, and other physical characteristics relating to the embodiment disclosed herein are not to be considered as limiting, unless the claims expressly state otherwise.

The present invention pertains to a novel electrical control system for controlling the transmission of a plurality of variable transmission windows. Examples of variable transmission windows include windows that are able to change their transmissivity based on electrical signals applied to the window, such as the windows generally described in commonly assigned U.S. Patent No. 6,407,847 entitled "ELECTROCHROMIC MEDIUM HAVING A COLOR STABILITY", U.S. Patent No. 6,239,898 entitled "ELECTROCHROMIC STRUCTURES," U.S. Patent No. 6,597,489 entitled "ELECTRODE DESIGN FOR ELECTROCHROMIC DEVICES," and U.S. Patent No. 5,805,330 entitled "ELECTRO-OPTIC WINDOW INCORPORATING A DISCRETE PHOTOVOLTAIC DEVICE". Examples of electrochromic devices that may be used in windows are described in U.S. Patent No. 6,433,914 entitled "COLOR-STABILIZED ELECTROCHROMIC DEVICES," U.S. Patent No. 6,137,620 entitled "ELECTROCHROMIC MEDIA WITH CONCENTRATION-ENHANCED STABILITY, PROCESS FOR THE PREPARATION THEREOF AND USE IN ELECTROCHROMIC DEVICES," U.S. Patent No. 5,940,201 entitled "ELECTROCHROMIC MIRROR WITH TWO THIN GLASS ELEMENTS AND A GELLED ELECTROCHROMIC MEDIUM," and U.S. Patent Application Publication No. 2006/0056003 entitled "VEHICULAR REARVIEW MIRROR ELEMENTS AND ASSEMBLIES INCORPORATING THESE ELEMENTS". Other examples of variable transmission windows and systems for controlling them are disclosed in commonly assigned U.S. Patent No.7,085,609, entitled "VARIABLE TRANSMISSION WINDOW CONSTRUCTIONS," U.S. Patent No. 6,567,708 entitled "SYSTEM TO INTERCONNECT, LINK, AND CONTROL VARIABLE TRANSMISSION WINDOWS AND VARIABLE TRANSMISSION WINDOW CONSTRUCTIONS".

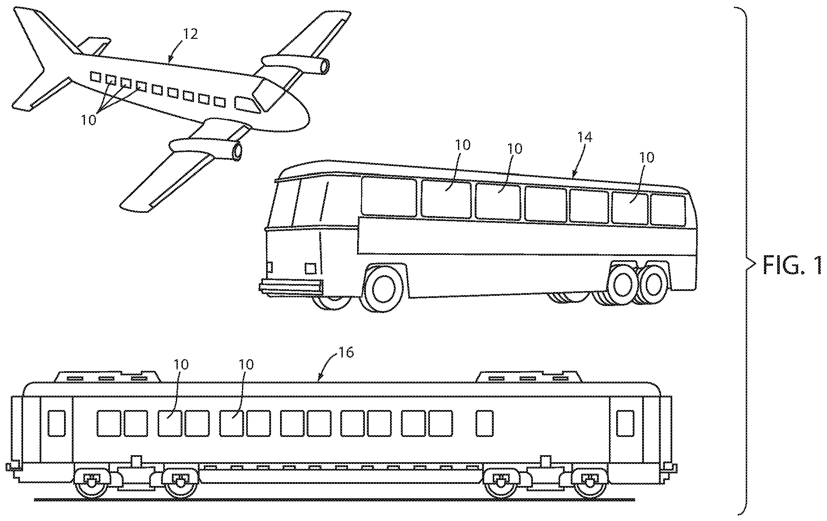

FIG. 1 is a graphical representation of multi-passenger vehicles employing variable transmittance windows 10. Mass transit multi-passenger vehicles employing variable transmittance windows 10 include, for example, aircraft 12, buses 14, and trains 16. It should be appreciated that any form of vehicle including other multi-passenger vehicles may employ variable transmittance windows 10. The multi-passenger vehicles generally illustrated in Fig. 1 also include window control systems (not shown) for controlling variable transmittance windows 10.

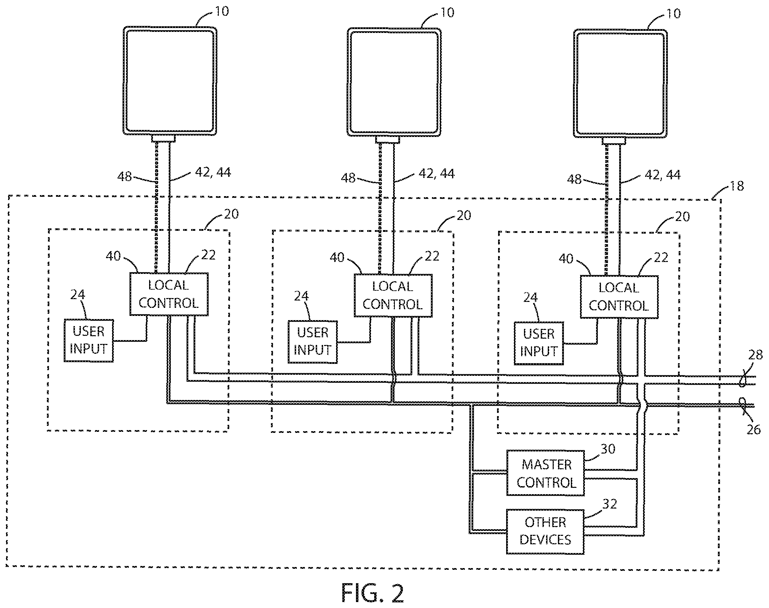

FIG. 2 generally illustrates a plurality of variable transmittance windows 10 that may be employed in vehicles. The windows are in communication with a window control system 18 electrically coupled to the variable transmittance windows 10 for controlling the transmittance state of the variable transmittance windows 10. Window control system 18 includes a window control unit 20 coupled to each of the variable transmittance windows 10 for controlling the transmittance of each of the variable transmittance windows 10. Each window control unit 20 includes local control circuitry 22 for controlling the transmittance state of an associated variable transmittance window 10. Each window control unit 20 is also shown having a user input mechanism 24 coupled to local control circuitry 22 for providing a user input to local control circuitry 22 to change the transmittance state of the associated variable transmittance window 10. Each window control unit 20 is also shown coupled to power and ground lines 26 for providing power to local control circuitry 22, user input mechanism 24, and variable transmittance window 10. As shown, power is provided to variable transmittance window 10 via local control circuitry 22 from the power and ground lines 26.

Each window control unit 20 is also shown coupled to a window control system bus 28. Other devices also coupled to the window control system bus 28 include master control circuitry 30 and other electronic devices 32. Master control circuitry 30 is configured to monitor signals provided on the window control system bus 28 by each of window control units 20 and to provide control signals on the bus to each of window control units 20. Master control circuitry 30 includes processing circuitry, including logic, memory, and bus interface circuitry, to permit master control circuitry 30 to generate, send, receive, and decode signals on the window control system bus 28. Local control circuitry 22, included in each of window control units 20, is configured to receive a desired window transmittance state from user input mechanism 24, and provide electrical signals to variable the transmittance window 10 to change the transmittance state of variable transmittance window 10 to the state requested by the user via user input mechanism 24.

Local control circuitry 22 is also configured to monitor various characteristics of variable transmittance window 10, including the power consumed by variable transmittance window 10 and the transmittance state of variable transmittance window 10. The local control circuitry 22 comprises a memory configured to store one or more voltage levels to identify a desired or optimum voltage level to identify the delivered voltage or current supplied to the electrochromic element 46 or the electrochromic supplies 42 and 44. The desired or optimum voltage level is predetermined based on the particular hardware or components for the local control circuitry and other components of the window control system 18. Local control circuitry 22 also includes circuitry for receiving signals from, and sending signals to, the window control system bus 28.

Master control circuitry 30 is configured to issue override signals to window control units 20 via the window control system bus 28. These override signals have the effect of directing the local control circuitry 22 of each of window control units 20 to change the transmittance state of variable transmittance windows 10 to the state selected by the override signal sent by master control circuitry 30. Override signals issued on the window control system bus 28 by master control circuitry 30 may include signals to cause all variable transmittance windows to darken, lighten, go to the darkest state, go to the lightest state, or go to a predetermined intermediate transmittance state. Master control circuitry 30 may be configured to direct all window control units 20 to alter their states at the same time, or may direct window control units 20 to alter the transmittance state of each window one at a time, or in groups, in order to minimize system power loading.

Master control circuitry 30 may also be configured to direct window control units 20 to alter the transmittance state of all windows simultaneously, but in incremental steps. For example, in one mode, master control circuitry 30 directs window control units 20 to change the transmittance state of the variable transmittance windows 10 to the darkest transmittance state simultaneously in 10 percent increments. Master control circuitry 30 and window control units 20 may be configured to maintain an override transmittance state for a predetermined period of time determined by master control circuitry 30, after which time individual users may change the transmittance state of individual windows via user input mechanism 24. It should be appreciated that various embodiments of the master control circuitry 30 may be configured to change a window or multiple windows to intermediate transmittance states between the highest and lowest transmittance states.

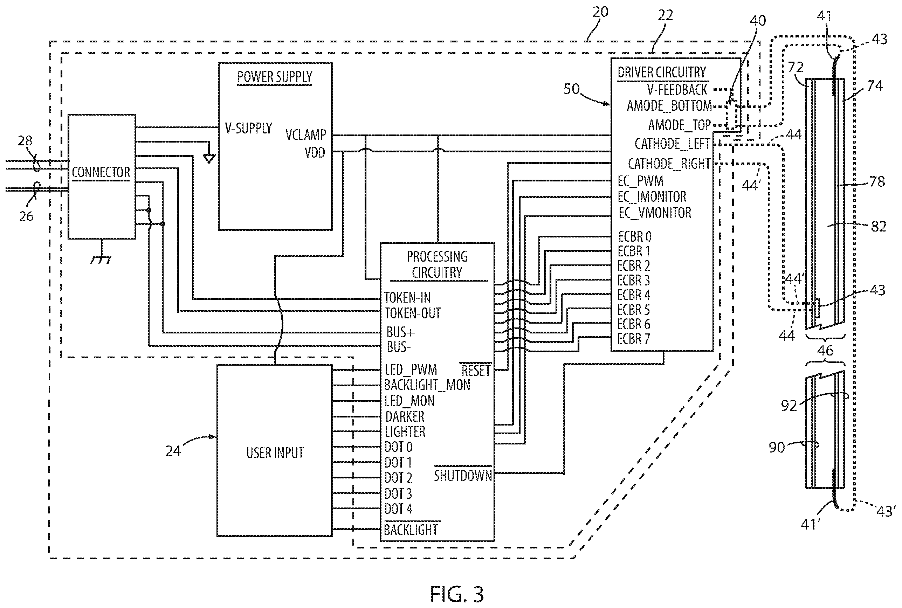

Referring now to FIGS. 2 and 3, in embodiments of the claimed invention, the window control system 18 comprises local control circuitry 22. The local control circuitry 22 comprises and/or is connected to at least one feedback circuit 40. The feedback circuit 40 is configured to detect a voltage output potential supplied or supplied voltage to a plurality of electrochromic supplies 42 and 44 or electro-optic supplies. For example, the feedback circuit 40 is configured to identify a flow of current supplied to the electrochromic supplies 42 and 44 or conductive supplies such that the local control circuit is operable to measure supplied voltage. In response to the output potential or supplied voltage detected or measured, the feedback circuit 40 outputs a feedback signal. Based on a feedback signal from the feedback circuit 40, the local control circuitry 22 adjusts the output potential or output voltage to the electrochromic supplies 42 and 44 to ensure that an electrochromic element 46 or an electro-optic element of the variable transmittance window 10 is receiving a desired or optimum voltage level. The local control circuitry 22 determines the optimum voltage based on a predetermined voltage level indicated in a memory incorporated in the local control circuitry 22.

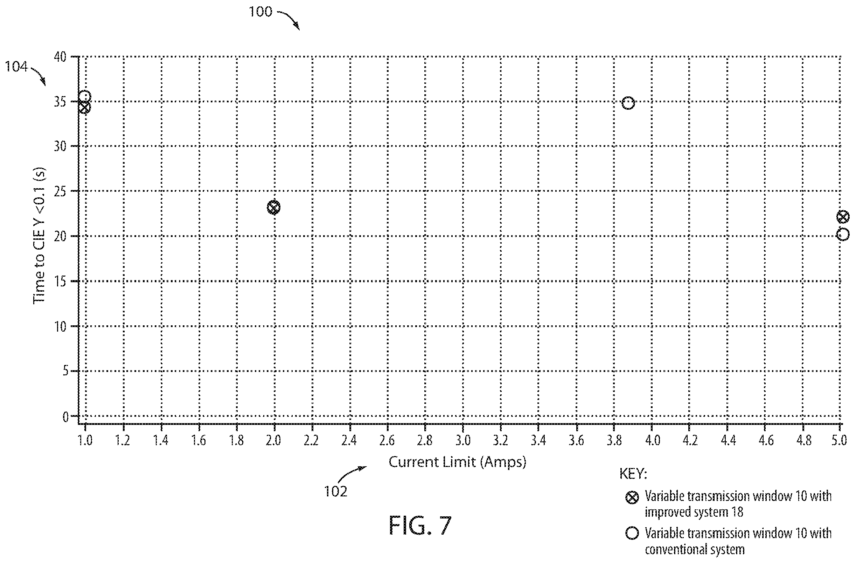

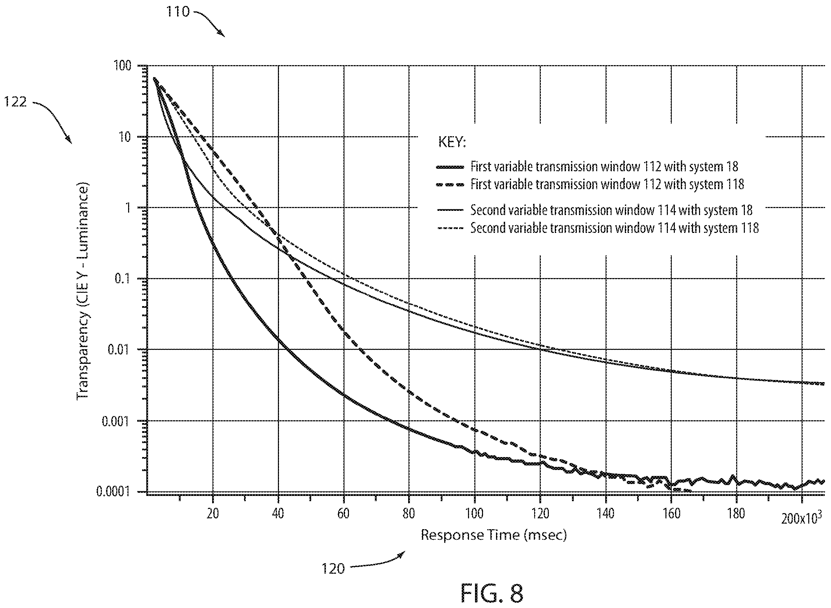

By monitoring and adjusting the voltage supplied to the electrochromic element 46, the control system 18 provides for improved performance in the form of reduced transmittance adjustment time for the electrochromic elements 46. By monitoring the voltage potential delivered the electrochromic element 46 or the electrochromic supplies 42 and 44, the local control circuitry 22 is configured to detect a difference between a delivered voltage or supplied voltage and a desired voltage or optimum voltage. Based on the difference, local controller adjusts the current supplied to electrochromic supplies 42 and 44 to ensure the supplied voltage is approximately the same as the desired voltage. By utilizing such a method, the control system 18 has been shown to improve a transmittance adjustment time of the variable transmittance windows 10 by up to 50%. For detailed results demonstrating the performance improvements provided by the local control circuitry 22 utilizing the feedback circuit 40, refer to FIGS. 7 and 8.

The local control circuitry 22 comprises and/or is in communication with the feedback circuit 40. In some embodiments, the feedback circuit 40 may be incorporated in the local control circuitry 22. In various embodiments, the feedback circuit 40 may be in communication with the local control circuitry 22 via a remote sensing line 48. The remote sensing line 48 may be coupled to a driver circuitry 50 of the local control circuitry 22. In embodiments wherein the feedback circuit 40 is remote from the local control circuitry 22 and in communication via the remote sensing line 48, the feedback circuit 40 may be disposed proximate a distal end portion 48b of the remote sensing line 48 and coupled to the feedback circuit 40 proximate an end portion 48a. The remote sensing line 48 may comprise one or more conductors in communication with the electrochromic supplies 42 and/or 44 via one or more sensing devices, which may form a portion of the feedback circuit 40.

The feedback circuit 40 may be located proximate the electrochromic element 46 or the electro-optic element and in some embodiments, may be coupled to one or more of the conducting lines or structures 41, 43, and 48. The feedback circuit 40 may be in communication with the local control circuitry 22 via a feedback input V_FEEDBACK, which may monitor the voltage supplied to the electrochromic supplies 42, 44 and/or the voltage detected by the remote sensing line 48. In this configuration, the local control circuitry 22 may monitor the potential voltage delivered to the electrochromic supplies and/or electrochromic element 46 with the feedback input V_FEEDBACK. In response to identifying the potential voltage supplied to the electrochromic elements 46 and/or the electrochromic supplies 42, 44, the local control circuitry 22 adjusts the voltage or current delivered to the electrochromic element 46.

For example, the controller circuitry 22 may monitor the feedback input V_FEEDBACK via an analog to digital converter (ADC) during a transmittance adjustment cycle to determine the voltage potential delivered to the electrochromic elements 46 and/or the electrochromic supplies 42, 44. In response to identifying that the delivered voltage is less than the desired or optimum voltage, the local control circuitry 22 increases the current supplied to the electrochromic element 46 by increasing the output voltage and potential supplied to the electrochromic supplies 42 and 44. In this way, the control circuitry 22 maintains the desired voltage at the electrochromic element 46 to provide for the improved rate of change of transmittance of the variable transmittance windows 10.

The difference in the delivered voltage in comparison to the desired voltage may be a result of the combined resistances or losses associated with the window control system 18. For example, the difference in the supplied voltage in comparison to the desired voltage may be the result of losses in the driver circuitry 50, component wear, system operating temperatures, losses in the electrochromic supplies 42 and 44 and/or losses in one more communication busses that may be incorporated to communicatively couple the local control circuitry 22 to the electrochromic element 46. Accordingly, the disclosure provides for improved performance of the electrochromic element 46 in various systems for variable transmittance windows 10. Additionally the feedback circuit 40 and associated operation may be incorporated in control systems for variable transmittance windows 10 without introducing additional cost and weight that may be incurred by utilizing wires and/or components with lower resistance and associated losses.

Referring now to FIG. 3, in some embodiments, the feedback circuit 40 may comprise a sensing resistor R_{SNS}. In such an embodiment, the distal end portion 48a of the remote sensing line 48 may be connected to the remote sensing resistor R_{SNS}. In this configuration, the driver circuitry 50 may detect the voltage received by the feedback input V_FEEDBACK over the known resistance of the resistor R_{SNS} to determine the voltage delivered to the electrochromic element 46. By comparing the voltage delivered to the desired voltage or a reference voltage, the local control circuitry 22 detects a difference in the supplied or delivered voltage relative to an optimum voltage level. In response to a drop in the delivered voltage, the local control circuitry 22 increases the potential output to the electrochromic element 46. In this way the rate of change of the transmittance of the electrochromic element 46 is optimized.
Further detailed discussion of circuits and systems similar to the window control system 18 is provide in commonly owned United States Pat 8,547,624 B2.

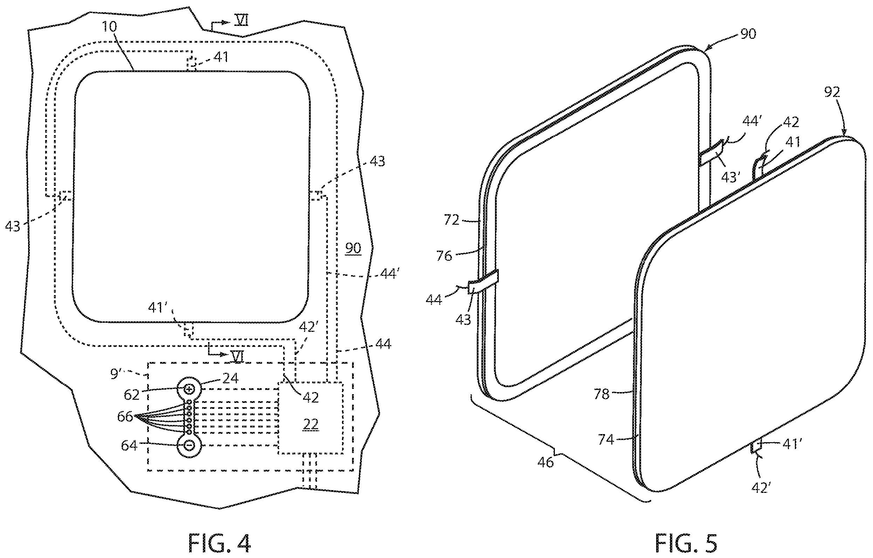

Referring now to FIGS. 4, 5, and 6, the variable transmittance window 10 and window control unit 20 are shown. Window control unit 20 includes the user input mechanism 24, including first user input area 62, second user input area 64, and indicator lights 66. Also shown in hidden lines are local control circuitry 22 and electrochromic supplies 42, 42', 44, and 44' coupled to conducting structures 41, 41', 43, and 43', respectively, of variable transmittance window 10. As shown, user input mechanism 24 has first user input area 62 and second user input area 64 configured to be physically contacted by a user of variable transmittance window 10 to change a selected transmittance state of the variable transmittance window 10. Indicator lights 66 are configured to display light indicating the current transmittance state of the window, the selected transmittance state of the window, whether the window is currently changing states, and/or whether the window control system is in an error state. As shown, user input mechanism 24 may be made of a material that is impervious to moisture, and may be sealed to keep moisture and dirt from internal electrical and mechanical structures of user input mechanism 24 and local control circuitry 22.

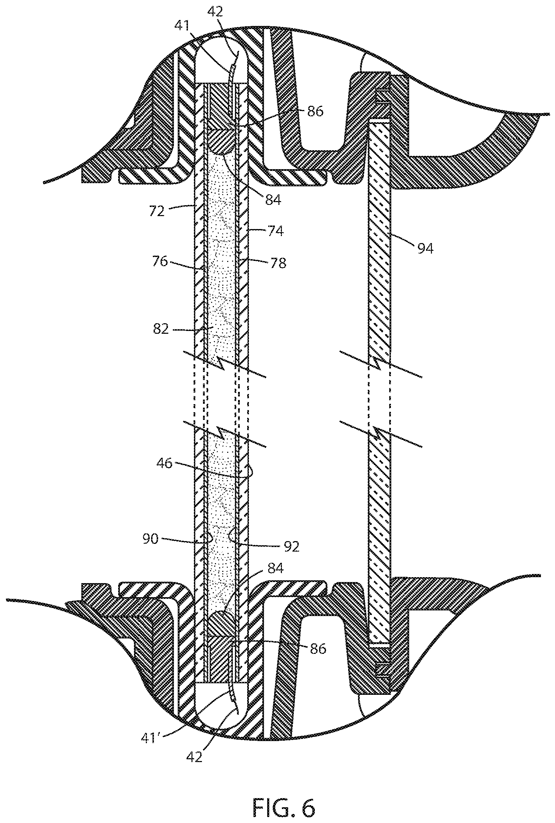

Fig. 6 is a cross-section of a variable transmittance window 10 and elements of a window control system 18. Variable transmittance window 10 includes an electrochromic element 46 or electro-optic element that includes a first substrate 72 and a second substrate 74 protected by a dust cover 94. In the present embodiments, substrates 72 and 74 are thin glass substrates. In alternate embodiments, substrates 72 and 74 are clear substrates of varying thicknesses that may be made of glass or other suitable substrate materials. Each substrate 72 and 74 may comprise a transparent highly electrically conductive layer 76 and 78, respectively, deposited thereon. In a preferred embodiment, first and second substrates 72 and 74 are made of glass and preferably have a thickness of less than about 1.2 mm, more preferably of less than about 0.8 mm,
and most preferably of less than about 0.6 mm. In an alternate embodiment, the substrates may be bent. In the present embodiment, transparent highly electrically conductive layers 76 and 78 comprise indium-tin oxide (ITO) preferably at a thickness of at least two, full waves.

As shown, the space between first substrate 72 and second substrate 74 is filled with an electrochromic medium 82 in electrical contact with layers 76 and 78. The electrochromic medium 82 is deposited between the first substrate 72 and second substrate 74 through a fill hole (not shown) in one of the first substrate 72 and second substrate 74. The electrochromic medium 82 is retained between the inner surfaces of first substrate 72 and second substrate 74 by a first seal 84 and a second seal 86. First and second seals 84 and 86 also serve to maintain the space between the surfaces of first substrate 72 and second substrate 74. First seal 84 or second seal 86 may comprise a material that substantially holds its size and shape. In this case the first or second seal material may be used to establish the spacing between the substrates.

The surface of each of first substrate 72 and second substrate 74 that has been coated with transparent conductive layer 76 or 78 also includes a highly conductive material deposited on the transparent conductive layer 76 around a significant portion of the perimeter of each of first substrate 72 and second substrate 74. In the present embodiment, the highly conductive material is silver epoxy comprising silver flakes. Each of first substrate 72 and second substrate 74 also includes multiple conducting structures 41, 41', 43, and 43' electrically coupled to the highly conductive material deposited around a significant portion of the perimeter of the structures. The conducting structures 43 and 43' of first substrate 72 are electrically coupled to electrochromic supplies 45 and 45', respectively, via conducting material. The conducting structures 41 and 41' of second substrate 74 are each coupled to electrochromic supplies 43 and 43', respectively, via conducting material. In this manner, power provided by driver circuitry 50 is provided to the transparent electrically conductive layers 76 and 78 of each of first substrate 72 and second substrate 74, respectively. If a silver epoxy is used, the conducting structures 41, 41', 43, and 43' are preferably silver tabs and the conducting material would preferably contain silver flake.

It should be appreciated that additional coatings can be selected to minimize the optical impact of these additional layers. For example, opaque, highly absorbing or high refractive index coatings, which dramatically affect the optics of the final electrochromic element 46, should be avoided. The preferred stress compensation coating layer would have a low refractive index similar to that of the substrate 72. Layers with higher refractive indices may be used in certain applications.

Referring now to FIG. 7, a graph 100 of a supplied current limit 102 in Amps versus a transition time 104 in seconds is shown for a variable transmittance window control system with a sense electrode. For comparison, results are also shown for a variable transmittance window control system 18 without a sense electrode. The transition time 104 may correspond to the time required to change the transmittance of a window from a substantially transparent level to a CIE Y (Luminance) value of less than 0.1. Analysis of the results demonstrates that by including a sensing electrode or the feedback circuit 40, as previously discussed, the transition time for the window control system to transition from the a substantially transparent level to a CIE Y (Luminance) value of less than 0.1 may be reduced. Accordingly, the incorporation of the sensing electrode (e.g. the feedback circuit 40) may provide for improved performance of the window control systems discussed herein.

As illustrated by the test results, at lower current limits (e.g. 1 Amp), the incorporation of the sensing electrode increased the transition time 104 from approximately 34.5 sec. to 35.5 sec. At a current limit of 2 Amps, the incorporation of the sensing electrode had little effect on the transition time. However, the transition time 104 corresponding to the current limit of 5 Amps improved the transition time from approximately 22.2 sec. to 20.1 sec. Accordingly, by monitoring the current via the sensing electrode (e.g. the feedback circuit 40), the local control circuitry 22 of the control system 18 may be operable to ensure that the current is consistently supplied to the electrochromic element 46 such that the transition time 104 is improved. Accordingly, the control system 18 may provide for improved performance in the form of faster transitions by utilizing the sensing electrode (e.g. the feedback circuit 40) to ensure that a desired current is supplied to the electrochromic element 46.

Referring now to FIG. 8, a graph 110 performance characteristics for the window control system 18 for two different exemplary variable transmittance windows 10 are shown to compare the performance improvements provided by the feedback circuit 40. As demonstrated, the performance characteristics of a first variable transmittance window 112 are shown compared to the performance characteristics for a second variable transmittance window 114. Additionally, the performance characteristics for each of the variable transmittance windows 112, 114 are shown for a conventional window control system 118 and the improved window control system 18 comprising the feedback circuit 40. From the results, the improved performance provided by the improved window control system 18 discussed herein are apparent.

The graph 110 demonstrates the response time 120 of each of the variable transmittance windows 112, 114 to adjust a level of transparency 122 (e.g. CIE Y luminance) based on the voltage potential supplied by the conventional window control system 118 and the improved window control system 18. As illustrated, the transparency 122 of each of the variable transmittance windows 112 and 114 changes at an increased rate in response to the improved window control system 18 compared to the conventional window control system 118. The improved or increased rate of change in the transparency 122 and corresponding change in transmission through the variable transmittance windows 112, 114 is improved as a result of the improved window control system 18 increasing the voltage potential supplied to the electrochromic supplies 42 and 44 in response to an indication from the feedback circuit 40 that the voltage potential supplied is less than a desired or optimum voltage level.

The results of FIG. 8 demonstrate that the improved window control system 18 is operable to improve the response of the transparency control of the variable transmittance windows 112, 114 particularly during the first half of a total transmission change period. For example, the second variable transmission window 114 reaches a substantially lower level of transparency 122 over the first 30 seconds of transition in response to the control provided by the improved window control system 18 than in response to the conventional window control system 118. The response time 120 over the initial stages of change in the transparency 122 may provide for a large improvement of the apparent response time particularly as shown on the logarithmic scale of FIG. 8. Accordingly, the improved window control system 18 provides for improved performance for a variety of applications.

Although the above description of the preferred embodiments are primarily directed to window control systems for aircraft, it should be appreciated that the preferred embodiments, including those utilizing master and slave controller circuitry and algorithms, can be utilized to control the transmittance of windows in buildings and in other vehicles designed to carry passengers, such as, for example, ships, buses, and automobiles.

## Claims

1. A control system (18) for variable transmittance windows (10), comprising:
at least one electro-optic element (46);
a local control circuit (22) in communication with the electro-optic element (46) via a conductive supply (42, 44),
wherein the local control circuit (22) is configured to control an output voltage, and
wherein the local control circuitry (22) comprises a memory configured to store one or more voltage levels to identify an optimum voltage level to identify that a delivered voltage is less than the optimum voltage or current supplied to the electro-optic element (46) by the conductive supply (42, 44);
wherein the control system (18) comprises:
a feedback circuit (40) in communication with the conductive supply (42, 44) and configured to measure a supplied voltage delivered to the electro-optic element (46) by the conductive supply (42, 44), and communicate a feedback signal to the local control circuit (22);
wherein the local control circuit (22) is configured to:
receive the feedback signal;
identify the supplied voltage based on the feedback signal;
predetermine the optimum voltage level based on a particular hardware or components for the local control circuitry (22) and other components of the window control system (18),
compare the supplied voltage to the optimum voltage level;
detect a difference between a voltage potential of the supplied voltage delivered to the electro-optic element (46) and the optimum voltage level based on the comparison; and
adjust the output voltage to the optimum voltage level in response to the difference detected as a drop in the supplied voltage delivered to the electro-optic element (46), wherein a rate of change of transmittance of the electro-optic element (46) of the variable transmittance window (10) is increased as a result of the adjustment of the output voltage.

2. The control system (18) according to claim 1, wherein the at least one electro-optic element (46) corresponds to a plurality of electro-optic elements (46), each of the electro-optic elements (46) comprising a local control circuit (22).

3. The control system (18) according to claim 2, further comprising:
a master control circuit (30) in communication with the plurality of local control circuits (22), wherein the master control circuit (30) is configured to communicate a master control input thereby controlling the transmission level of each of the local control circuits (22).

4. The control system (18) according to claim 3, wherein each of the local control circuits (22) comprises a user interface (24) configured to receive a local input to control the transmission level of the electro-optic element (46).

5. The control system (18) according to claim 4, wherein the local control circuit (22) is configured to prioritize the master control input over the local input to control the transmission level.

6. The control system (18) according to any one of claims 1-5, wherein the electro-optic element (46) is an electrochromic element.

7. A method for controlling a transmission level of a variable transmission window (10), the method comprising:
measuring a supplied voltage delivered to an electrochromic element (46) by a conductive supply (42, 44) to the variable transmission window (10);
communicating the supplied voltage to a local control circuit (22) as a feedback signal, wherein the local control circuitry (22) comprises a memory that stores one or more voltage levels to identify an optimum voltage level to identify that a delivered voltage is less than the optimum voltage or current supplied to the electro-optic element (46) by the conductive supply (42, 44);
receiving the feedback signal at the local control circuit (22);
identifying the supplied voltage delivered to an electrochromic element (46) by the conductive supply based on the feedback signal;
predetermining the optimum voltage level based on a particular hardware or components for the local control circuitry (22) and other components of the window control system (18);
comparing the supplied voltage to the optimum voltage level;
detecting a difference between a voltage potential of the supplied voltage delivered to the electro-optic element (46) and the optimum voltage level based on the comparison; and
adjusting an output voltage to the optimum voltage level in response to the difference detected as a drop in the supplied voltage delivered to the electro-optic element (46), wherein a rate of change of transmittance of the electro-optic element (46) of the variable transmittance window (10) is increased as a result of the adjustment of the output voltage.

8. The method according to claim 7, wherein the optimum voltage corresponds to a voltage intended to be supplied to the conductive supply (42, 44) thereby maximizing a rate of change of a transmission level of the variable transmission window (10).

## Patentansprüche

1. Steuer- bzw. Regelsystem (18) für Fenster mit variabler Transmission (10), umfassend:
mindestens ein elektrooptisches Element (46);
einen lokalen Steuer- bzw. Regelkreis (22), der mit dem elektrooptischen Element (46) über eine leitfähige Versorgung (42, 44) in Kommunikation steht,
wobei der lokale Steuer- bzw. Regelkreis (22) ausgestaltet ist, eine Ausgangsspannung zu steuern bzw. regeln, und
wobei der lokale Steuer- bzw. Regelkreis (22) einen Speicher umfasst, der ausgestaltet ist, ein oder mehrere Spannungsniveaus zu speichern, um ein optimales Spannungsniveau zu identifizieren, um zu identifizieren, dass eine zugeführte Spannung niedriger ist als die optimale Spannung oder der Strom, mit der bzw. mit dem das elektrooptische Element (46) durch die leitfähige Versorgung (42, 44) versorgt wird;
wobei das Steuer- bzw. Regelsystem (18) umfasst:
einen Rückführkreis (40), der mit der leitfähigen Versorgung (42, 44) in Kommunikation steht und ausgestaltet ist, eine Versorgungsspannung zu messen, die dem elektrooptischen Element (46) durch die leitfähige Versorgung (42, 44) zugeführt wird, und ein Rückführsignal an den lokalen Steuer- bzw. Regelkreis (22) zu melden;
wobei der lokale Steuer- bzw. Regelkreis (22) ausgestaltet ist:
das Rückführsignal zu empfangen;
die Versorgungsspannung basierend auf dem Rückführsignal zu identifizieren;
das optimale Spannungsniveau basierend auf einer speziellen Hardware oder Komponenten für den lokalen Steuer- bzw. Regelkreis (22) und anderen Komponenten des Steuer- bzw. Regelsystems (18) für Fenster vorzubestimmen,
die Versorgungsspannung mit dem optimalen Spannungsniveau zu vergleichen;
eine Differenz zwischen einem Spannungspotenzial der Versorgungsspannung, die dem elektrooptischen Element (46) zugeführt wird, und dem optimalen Spannungsniveau basierend auf dem Vergleich zu erkennen; und
die Ausgangsspannung an das optimale Spannungsniveau in Antwort auf die Differenz anzupassen, die als Abfall in der Versorgungsspannung, die dem elektrooptischen Element (46) zugeführt wird, erkannt wurde, wobei eine Transmissionsänderungsrate des elektrooptischen Elements (46) des Fensters mit variabler Transmission (10) als Ergebnis der Anpassung der Ausgangsspannung erhöht wird.

2. Steuer- bzw. Regelsystem (18) nach Anspruch 1, wobei das mindestens eine elektrooptische Element (46) einer Vielzahl von elektrooptischen Elementen (46) entspricht, wobei jedes der elektrooptischen Elemente (46) einen lokalen Steuer- bzw. Regelkreis (22) umfasst.

3. Steuer- bzw. Regelsystem (18) nach Anspruch 2, weiter umfassend:
einen Mastersteuer- bzw. -regelkreis (30), der mit der Vielzahl von lokalen Steuer- bzw. Regelkreisen (22) in Kommunikation steht, wobei der Mastersteuer- bzw. -regelkreis (30) ausgestaltet ist, einen Mastersteuer- bzw. - regeleingang zu melden, wodurch das Transmissionsniveau jedes der lokalen Steuer- bzw. Regelkreise (22) gesteuert bzw. geregelt wird.

4. Steuer- bzw. Regelsystem (18) nach Anspruch 3, wobei jeder der lokalen Steuer- bzw. Regelkreise (22) eine Benutzerschnittstelle (24) umfasst, die ausgestaltet ist, einen lokalen Eingang zu empfangen, um das Transmissionsniveau des elektrooptischen Elements (46) zu steuern bzw. regeln.

5. Steuer- bzw. Regelsystem (18) nach Anspruch 4, wobei der lokale Steuer- bzw. Regelkreis (22) ausgestaltet ist, den Mastersteuer- bzw. -regeleingang über den lokalen Eingang zu priorisieren, um das Transmissionsniveau zu steuern bzw. regeln.

6. Steuer- bzw. Regelsystem (18) nach einem der Ansprüche 1 bis 5, wobei das elektrooptische Element (46) ein elektrochromes Element ist.

7. Verfahren zum Steuern bzw. Regeln eines Transmissionsniveaus eines Fensters mit variabler Transmission (10), wobei das Verfahren umfasst:
Messen einer Versorgungsspannung, die einem elektrochromen Element (46) durch eine leitfähige Versorgung (42, 44) des Fensters mit variabler Transmission (10) zugeführt wird;
Melden der Versorgungsspannung an einen lokalen Steuer- bzw. Regelkreis (22) als Rückführsignal, wobei der lokale Steuer- bzw. Regelkreis (22) einen Speicher umfasst, der ein oder mehrere Spannungsniveaus speichert, um ein optimales Spannungsniveau zu identifizieren, um zu identifizieren, dass eine zugeführte Spannung niedriger ist als die optimale Spannung oder der Strom, mit der bzw. mit dem das elektrooptische Element (46) durch die leitfähige Versorgung (42, 44) versorgt wird;
Empfangen des Rückführsignals am lokalen Steuer- bzw. Regelkreis (22);
Identifizieren der Versorgungsspannung, die einem elektrochromen Element (46) durch die leitfähige Versorgung zugeführt wird, basierend auf dem Rückführsignal;
Vorbestimmen des optimalen Spannungsniveaus basierend auf einer speziellen Hardware oder Komponenten für den lokalen Steuer- bzw. Regelkreis (22) und anderen Komponenten des Steuer- bzw. Regelsystems (18) für Fenster;
Vergleichen der Versorgungsspannung mit dem optimalen Spannungsniveau;
Erkennen einer Differenz zwischen einem Spannungspotenzial der Versorgungsspannung, die dem elektrooptischen Element (46) zugeführt wird, und dem optimalen Spannungsniveau basierend auf dem Vergleich; und
Anpassen einer Ausgangsspannung an das optimale Spannungsniveau in Antwort auf die Differenz, die als Abfall in der Versorgungsspannung, die dem elektrooptischen Element (46) zugeführt wird, erkannt wurde, wobei eine Transmissionsänderungsrate des elektrooptischen Elements (46) des Fensters mit variabler Transmission (10) als Ergebnis der Anpassung der Ausgangsspannung erhöht wird.

8. Verfahren nach Anspruch 7, wobei die optimale Spannung einer Spannung entspricht, mit der die leitfähige Versorgung (42, 44) versorgt werden soll, wodurch eine Änderungsrate eines Transmissionsniveaus des Fensters mit variabler Transmission (10) maximiert wird.

## Revendications

1. Système de commande (18) pour des fenêtres à transmittance variable (10), comprenant :
au moins un élément électro-optique (46) ;
un circuit de commande local (22) en communication avec l'élément électro-optique (46) par le biais d'une alimentation conductrice (42, 44),
dans lequel le circuit de commande local (22) comprend une mémoire configurée pour stocker un ou plusieurs niveaux de tension pour identifier un niveau de tension optimal pour identifier qu'une tension souhaitée est inférieure à la tension ou au courant optimal fourni à l'élément électro-optique (46) par l'alimentation conductrice (42, 44) ;
dans lequel le système de commande (18) comprend :
un circuit de rétroaction (40) en communication avec l'alimentation conductrice (42, 44) et configuré pour mesurer une tension alimentée délivrée à l'élément électro-optique (46) par l'alimentation conductrice (42, 44), et pour communiquer un signal de rétroaction au circuit de commande local (22) ;
dans lequel le circuit de commande local (22) est configuré pour :
recevoir le signal de rétroaction ;
identifier la tension alimentée sur la base du signal de rétroaction ;
prédéterminer le niveau de tension optimal sur la base d'un matériel informatique ou de composants particuliers pour le circuit de commande local (22) et d'autres composants du système de commande de fenêtre (18),
comparer la tension alimentée avec le niveau de tension optimal ;
détecter une différence entre un potentiel de tension de la tension alimentée délivrée à l'élément électro-optique (46) et le niveau de tension optimal sur la base de la comparaison ; et
régler la tension de sortie sur le niveau de tension optimal en réponse à la différence détectée comme une chute dans la tension alimentée délivrée à l'élément électro-optique (46), dans lequel une vitesse de changement de transmittance de l'élément électro-optique (46) de la fenêtre à transmittance variable (10) est augmentée en conséquence du réglage de la tension de sortie.

2. Système de commande (18) selon la revendication 1, dans lequel l'au moins un élément électro-optique (46) correspond à une pluralité d'éléments électro-optiques (46), chacun des éléments électro-optiques (46) comprenant un circuit de commande local (22).

3. Système de commande (18) selon la revendication 2, comprenant en outre :
un circuit de commande maître (30) en communication avec la pluralité de circuits de commande locaux (22), dans lequel le circuit de commande maître (30) est configuré pour communiquer une entrée de commande maître commandant ainsi le niveau de transmission de chacun des circuits de commande locaux (22).

4. Système de commande (18) selon la revendication 3, dans lequel chacun des circuits de commande locaux (22) comprend une interface d'utilisateur (24) configurée pour recevoir une entrée locale pour commander le niveau de transmission de l'élément électro-optique (46).

5. Système de commande (18) selon la revendication 4, dans lequel le circuit de commande local (22) est configuré pour privilégier l'entrée de commande maître plutôt que l'entrée locale pour commander le niveau de transmission.

6. Système de commande (18) selon l'une quelconque des revendications 1 à 5, dans lequel l'élément électro-optique (46) est un élément électro-chromique.

7. Procédé de commande d'un niveau de transmission d'une fenêtre à transmission variable (10), le procédé comprenant :
la mesure d'une tension alimentée délivrée à un élément électro-optique (46) par une alimentation conductrice (42, 44) à la fenêtre à transmission variable (10) ;
la communication de la tension alimentée à un circuit de commande local (22) en tant que signal de rétroaction, dans lequel le circuit de commande local (22) comprend une mémoire stockant un ou plusieurs niveaux de tension pour identifier un niveau de tension optimal pour identifier qu'une tension délivrée est inférieure à la tension ou au courant optimal fourni à l'élément électro-optique (46) par l'alimentation conductrice (42, 44) ;
la réception du signal de rétroaction au niveau du circuit de commande local (22) ;
l'identification de la tension alimentée délivrée à un élément électro-optique (46) par l'alimentation conductrice sur la base du signal de rétroaction ;
la prédétermination du niveau de tension optimal sur la base d'un matériel informatique ou de composants particuliers pour le circuit de commande local (22) et d'autres composants du système de commande de fenêtre (18) ;
la comparaison de la tension alimentée avec le niveau de tension optimal ;
la détection d'une différence entre un potentiel de tension de la tension alimentée délivrée à l'élément électro-optique (46) et le niveau de tension optimal sur la base de la comparaison ; et
le réglage de la tension de sortie au niveau de tension optimal en réponse à la différence détectée comme une chute dans la tension alimentée délivrée à l'élément électro-optique (46), dans lequel une vitesse de changement de transmittance de l'élément électro-optique (46) de la fenêtre à transmittance variable (10) est augmentée en conséquence du réglage de la tension de sortie.

8. Procédé selon la revendication 7, dans lequel la tension optimale correspond à une tension destinée à être fournie à l'alimentation conductrice (42, 44) maximisant ainsi une vitesse de changement d'un niveau de transmission de la fenêtre à transmission variable (10).
